# EUROPEAN PATENT SPECIFICATION

(11) **EP 2 927 452 B1**
(45) Date of publication and mention of the grant of the patent: **13.06.2018**
(21) Application number: 14163103.6
(22) Date of filing: 01.04.2014
(51) Int. Cl.: F01N 3/20, F01N 3/28, B01D 53/94

(54) **Decomposition system on board of a vehicle and the use thereof**
Zersetzungssystem an Bord eines Fahrzeugs und Verwendung davon
Système de décomposition à bord d'un véhicule et son utilisation

(43) Date of publication of application: 07.10.2015
(73) Proprietor: Plastic Omnium Advanced Innovation and Research, 1120 Bruxelles (BE)
(72) Inventor: Monge-Bonini, Beatriz, 1040 Bruxelles (BE); Dougnier, François, 3190 Boortmeerbeek (BE); Van Schaftingen, Jules-Joseph, 1300 Wavre (BE)
(74) Representative: Remy, Vincent Noel Paul

(56) References cited:
- EP-A1- 2 881 558
- WO-A1-2007/099372
- WO-A2-99/56858
- DE-A1- 4 425 420

## Description

### FIELD OF THE INVENTION

The invention relates to a system for use on board in a vehicle comprising a decomposition unit for decomposition of an ammonia precursor.

The invention also relates to a method of operating a vehicle for the decomposition

The invention further relates to a vehicle

### BACKGROUND OF THE INVENTION

A decomposition unit for ammonia precursor under the catalysis of a biological catalyst, more particularly an urease enzyme, has been proposed in several non-prepublished applications (patent application EP 13182919.4 and patent application EP 12199278.8) of the Applicant. In further investigations into such a system, the present inventors have come up with further improvements that enable that the system with the biological catalyst may be used over a longer period.

EP 2 881 558 A1, which is comprised in the state of the art pursuant to Article 54(3) and (4) EPC, discloses the loading of an ammonia precursor decomposition unit containing a precursor such as aqueous urea stored in a surrounding tank with capsules containing at least one protein through a pipe for decomposing the ammonia precursor to aqueous ammonia or ammonia gas.

WO 99/56858 A2 discloses a system and a method for catalytic reduction of nitrogen oxides in exhaust gases from diesel engines comprising separately feeding aqueous urea from a storage tank and an enzyme from another storage tank into a heated mixing chamber to generate ammonia from urea for passage of this ammonia into the engine exhaust gas.

### SUMMARY OF THE INVENTION

Accordingly, according to a first aspect, the invention relates to a system for decomposing a compound stored on board of a vehicle, comprising (1) a decomposition unit for at least partial conversion of a compound into reaction product under catalysis of a biological catalyst, (2) a storage unit for storage of biological catalyst(s), and (3) a dosing device for transferring the biological catalyst(s) into the decomposition unit; the compound is an ammonia precursor and the reaction product is aqua ammonia.

More particularly, a subject matter of the invention is a system for obtaining aqua ammonia for use in a vehicle on board, comprising:
- a decomposition unit, in which a catalysed conversion occurs, for obtaining aqua ammonia by decomposition of an ammonia precursor under catalysis of a biological catalyst, said aqua ammonia being a mixture of effluents that contains ammonium hydroxide, residue of ammonia precursor and optionally other products such as ammonium bicarbonate
- a storage unit for storage of biological catalyst,
- a dosing device for transferring biological catalyst into the decomposition unit, and
- a system controller configured to control the dosing device on the basis of conditions inside the storage and conversion system,
said system further comprising a buffer tank for containing aqua ammonia obtained in the decomposition unit.

According to a second aspect, the invention relates to a method of operating a system for decomposing a composition on board of a vehicle, comprising the steps of adding biological catalyst stored in a storage unit into a decomposition unit through a dosing device, and converting a compound in the decomposition unit under catalysis of the biological catalyst.

According to a further aspect, the invention relates to the use of a composition of a biological catalyst in liquid (fluid) form for supply to and storage in a storage unit within a vehicle, particularly for use in the system of the invention.
According to again a further aspect, the invention relates to the use of a composition of a biological catalyst in solid form for supply to and storage in a storage unit within a vehicle, particularly for use in the system for decomposition of the invention.

According to another aspect, the invention relates to a vehicle comprising the system for decomposition of the invention.
According to a further aspect, the invention relates to the combination of the system for decomposing a compound on board of a vehicle and a composition of biological catalyst, preferably in solid form, such as a capsule, and for instance loaded to a storage unit.

One embodiment of the invention is based on the insight that the biological catalyst may be stored in a storage unit separately from the decomposition unit, in which the catalysed conversion occurs. The catalyst may then be applied into the decomposition unit via the dosing device. Such application may occur from time-to-time and is suitably under the control of a system controller.

This separate storage of the biological catalyst turns out to have important advantages for the effective operation. First of all, the biological catalyst may be stored in the form of a composition that is more easily kept stable under conditions that preserve the biological catalyst. Secondly, the biological catalyst is not prone to conditions in the decomposition unit that are imposed by the first composition. In case that the first composition is a urea composition, the pH is for instance high (alkaline), which limits the lifetime of the catalyst. Thirdly, the use of an enzyme storage unit allows means for refilling the storage unit with fresh composition of biological catalyst. Therewith a practical and commercially viable solution is obtained.

The biological catalyst used in the invention may be supplied as a composition either in liquid form or in solid form. As a liquid, the composition is suitably relatively concentrated composition and is conditioned in the storage unit at a predefined temperature range suitable for preservation, and moreover at a predefined and suitable pH range. The dosing device suitable for dosing of a liquid composition is for instance a pump or a sprayer.

As a solid, the composition is even a better form of protection of the catalyst. Moreover, a solid form may be designed to contain a predefined amount of the biological catalyst. This simplifies a correct dosing, and also the dosing device may be simply in its constitution and not sensitive for pollution, contamination and the like.

The solid form may be a powder or a powder compressed into one or more pellets, granules or beads. Alternatively, it is in the form of capsules, pills. The solid form may further comprise a hydrogel encapsulating the catalyst. The solid form may be chosen to disintegrate after entering the decomposition unit, particularly in combination with any liquid thereon, such as a first composition of the chemical compound. This is particularly foreseen with powder, pellets, granules or beads. Additives may be added to support such disintegration. Alternatively, use can be made of capsule or pills. Those capsules or pills may be designed so that it will not, merely slowly or partially disintegrate after feeding into the decomposition unit. Major advantages of capsules and pills appear that these may be provided in dimensions that allow easy transfer. Moreover, capsules and pills may be provided with coatings to maintain integrity and also to avoid contamination of biological catalyst and/or its composition.

Suitably, use is made of a solid substrate onto which the biological catalyst is immobilized. One example of a suitable solid substrate is for instance synthetic polymers such as polystyrene, EVOH, nylon-6 and the like. Alternatively, use may be made of carbohydrates, such as chitosan, dextran and agarose, and porous nanoparticles, for instance of silica. The capsules and/or other solid forms are preferably provided with a diameter in the range of 10 microns-10 cm, preferably 1 mm-1cm, so as to handle them individually. However, capsules may further be provided with a liquid composition of biological catalyst inside.

The dosing device is driven by a system controller. The system controller may receive input on various conditions inside or outside the storage and conversion system, and is suitably configured to control the dosing device on the basis thereof. Examples of conditions are the time lapsed since a preceding dosing into the decomposition unit; the temperature outside and/or the temperature inside the decomposition unit, the chemical composition at an outlet of the decomposition unit and/or an inlet of a subsequent reactor (i.e. unit), for instance a fuel cell or an exhaust gas line. One or more sensors are suitably present to provide such or other input to the system controller. Furthermore, the system controller is suitably provided with a clock and with a memory, wherein for instance, the concentration of the biological catalyst in the storage unit may be stored. The invention also encompasses a control method, wherein the dosing device is controlled on the basis of input from such sensor and/or other information, such as the loading of the decomposition unit.

Preferably, the decomposition unit is provided with distribution means for distribution of the biological catalyst with the first composition. One example of such distribution means is agitation means, such as a stirrer. Alternatively, the distribution means are devices defining flow behaviour within the decomposition unit, for instance a split into a first reactor for mixing and a second reactor for continued reaction. Furthermore, use may be made of a plurality of catalysts for catalysis of a multistep reaction. The biological catalysts may herein be provided as a mixture, or separately. The decomposition unit could comprise a first and a second chamber that are provided in series, and wherein a first catalyst for a first reaction step is provided in the first chamber and wherein a second catalyst for a second reaction step is provided in the second chamber..

In operating the storage and conversion system, the biological catalyst may be added to the decomposition unit either during operation of said decomposition unit, or alternatively before operation of the decomposition unit is resumed, particularly in the case of batch-wise operation of the decomposition unit.

In a preferred embodiment, the storage unit is further provided with an inlet (also called refilling inlet) for a composition of the biological catalyst. This inlet is particularly intended for refill of the storage unit. In one embodiment, the inlet is an inlet for manual addition of biological catalyst. Such an inlet may be analogous to other inlets present in a vehicle, such as for cooling liquid, oil and the like. The inlet may be coupled to a pipe having an opening which is accessible from an outside of a vehicle. In one further embodiment hereof, the storage unit may be refilled with biological catalyst originating from a tank that is located externally to the storage and conversion system. Such tank may be present within the vehicle, but alternatively the tank may be present outside the vehicle, for instance as part of a petrol station. The external tank may herein be provided with a pump and means for transfer of metered quantities into the storage unit (or into a secondary enzyme tank within the vehicle).

In again a further embodiment, the storage unit for the biological catalyst or a composition thereof is provided with means for thermally conditioning. Furthermore, in one embodiment, the method of the invention comprises the step of thermally conditioning the storage unit for the biological catalyst.

The conditioning means may comprise e.g. a heater and/or a cooler. Suitably, the conditioning means furthermore comprise a thermally insulating encapsulation, such that the temperature can be most easily kept within the desired temperature range independent of the outside temperature and/or the generation of heat upon use of the combustion engine. Optionally, a cooler may be present, so as to lower the temperature in the decomposition unit in case the environmental temperature would be higher.

The heater comprises, in a particular implementation, resistive heating elements, for instance in the form of metallic heating filaments (wires), flexible heaters (i.e. heaters comprising one or more resistive track(s) affixed to a film or placed between two films, or any other type of resistive elements. PTC (positive temperature coefficient) elements are more particularly suitable for heating. Peltier effect cells constitute another example.

In a further embodiment, heat may be transmitted to the storage unit from heat sources within a vehicle, such as fuel cells, internal combustion engine, exhaust line. Means for heat transmission are known per se and include, for instance, heat pipes, heat pumps, heat exchangers.

In one further implementation, the storage unit for the biological catalyst is provided with a temperature sensor and the system is provided with control means. The control means are herein configured to control the conditioning means. The control means are suitably configured, in one embodiment, to control the temperature in the storage unit in a predetermined temperature range corresponding to preservation of the biological catalyst. In one specific implementation, the control means herein control that the temperature in the enzyme storage unit remains above a minimum temperature, for instance to prevent freezing of the biological catalyst. In one implementation, the method of the invention comprises the step of sensing a temperature in the vehicle, for instance in or near the storage unit, and controlling the thermal conditioning means on the basis of the sensed temperature.

In again a further embodiment, the decomposition unit is also provided with means for thermal conditioning. Such means for thermal conditioning may be principally the same, but with the difference that the temperature in the decomposition unit will typically be at another temperature range than in the storage unit for biological catalyst. Furthermore, in one embodiment, the method of the invention comprises the step of thermally conditioning the decomposition unit at a predefined temperature range suitable for activation of the biological catalyst. This temperature range is suitably 30-40°C, for instance from 36-38°C.

The location of the decomposition unit and the storage unit is open to further design. In a particular embodiment, the decomposition unit can be suitably located in an upper part of the tank or can be mounted on top of the tank. If the decomposition unit is present in an upper part of the tank, it may be mounted on a mounting flange. In another particular embodiment, the decomposition unit can be suitably located in a bottom part of the tank or can be present below the tank or adjacent to the tank. It is deemed suitable that the decomposition unit and the tank constitute a joint assembly in view of thereof that the decomposition unit is effectively an accessory to the tank. However, this is effectively not strictly necessary.

The storage unit for biological catalyst is suitably located in an upper part or on top of the decomposition unit. However, in view of the foreseen difference in temperature between the decomposition unit and the storage unit, the storage unit is in one suitable embodiment located externally to and at a distance from the decomposition unit. For instance, the storage unit may be mounted to an inlet pipe for the first composition, such as petrol or an ammonia precursor. A connecting pipe will then be present between the storage unit and the decomposition unit for supply of the biological catalyst composition from the storage unit. The dosing device may be located at any location between the storage unit and the decomposition unit, for instance at an outlet of the storage unit, but alternatively at the end of the connecting pipe.

The decomposition unit may be operated batchwise or in a continuous manner. Suitably, use is made of batch-wise operation. Preferably, the control occurs by means of a time-control device or a chemical sensor for control of the conversion. A time-control device can be a clock or any timing mechanism driven by a motor, by the vehicle electronic system or by another mean known by the status of the art. A chemical sensor device can be for example a pH sensor. When the conversion is complete, for instance, when 50% or ideally 80% of the first composition is converted into product, the resulting effluents may be transferred out of the decomposition unit.
Furthermore, a buffer tank is present for containing reaction product of the biochemical conversion by means of the biological catalyst. The size of the buffer tank may be chosen in dependence on the specific application and the flow rate of reaction product.

The system of the invention is suitably provided with a tank for storing the compound to be decomposed prior to entry into the decomposition unit. A fluid transfer device may be present for transferring the compound or a composition thereof from the tank to the decomposition unit. A fluid transfer device can be for example a pump, valve, combination of both, gravity, gravity in combination with a valve or a valve in combination with whatever system known by the state of the art to transfer liquid. In one preferred embodiment, the method of the invention thereto comprises the steps of: transferring the compound and/or a composition thereof into the decomposition unit according to an amount and/or flow rate, and dosing the biological catalyst in dependence on the transferred amount of the compound.

The compound is an ammonia precursor, such as for instance urea. The ammonia precursor is suitably present as a composition, such as an aqueous composition, more particularly a concentrated aqueous composition. Suitably, the composition is a concentrated urea solution of at least 10% urea. The reaction products may be for instance ammonia or hydrogen suitable for use in either selective catalytic reduction (SCR) methods for purifying exhaust gases or for fuelling fuel cells operating on the basis of hydrogen. Suitable biological catalysts are herein urease. In a further embodiment of the vehicle of the invention, an outlet of the system is coupled to an exhaust gas line for selective catalytic reduction (SCR) of exhaust gases. In an alternative embodiment, an outlet of the system is coupled to a unit for conversion of the ammonia composition into hydrogen for fuelling a hydrogen fuel cell.

The biological catalysts are suitable enzymes, that may be isolated or be present as part of living microorganisms that are feasible of producing enzymes for the biochemical conversion.

More particularly, the system of the invention is designed for and use on board of a vehicle, including cars, trucks and motors, using ether gasoline, diesel and optionally being a hybrid type that can also be driven on fuel cells. The system of the invention is thereto suitably coupled to an engine or to an SCR, and is operative during use of the vehicle.

The invention further relates to the refilling of the storage unit with a composition comprising the biological catalyst, as well as a petrol station provided with a catalyst tank and provided with means for refilling of a storage unit in a vehicle. The petrol station may further comprise dosing device metering the amount of the composition of biological catalyst provided to a vehicle. The petrol station may further be provided with display means for displaying the amount of the composition, as well as means for transmitting the provided amount to a payment terminal.
The provision of a storage unit for the biological catalyst composition allows efficient organisation of logistics for the provision of the biological catalyst composition. In one suitable embodiment, the refilling of the storage unit external to the decomposition unit could be arranged in a petrol station, in a manner corresponding to existing refilling of liquid compositions, such as urea solutions and fuels. Alternatively, the refilling may occur in a manner similar to the provision of motor oil.

In one embodiment, such means for refilling of the storage unit with a biological catalyst composition may be coupled to means for refilling a tank of the first composition, for instance an ammonia precursor solution. The coupling is suitably a mechanical coupling of a first filling pipe and a second filling pipe. This reduces the number of different refilling operations needed by a customer. Moreover, the amount of biological catalyst composition may be defined on the basis of the amount of the other composition, such as the urea composition.The vehicle is most suitably equipped with filling means, such as a pipe exposed at an outside of the vehicle.

The features set out above for the first aspect of the invention may also be applied to the other aspects.

### Brief description of the figures

The above and other advantages of the features and objects of the invention will become more apparent and the invention will be better understood from the following detailed description when read in conjunction with the accompanying drawings, in which:
Fig. 1 shows a first embodiment of the system of the invention;
Fig. 2 shows a second embodiment of the system of the invention;
Fig. 3 shows a third embodiment of the system of the invention;
Fig. 4-6 shows further implementations of the system of the third embodiment;
Fig. 7 shows a fourth embodiment of the system of the invention;
Fig. 8(a) and (b) show a first and a second operation stage in the operation of a fifth embodiment of the system of the invention.

### Description of embodiments

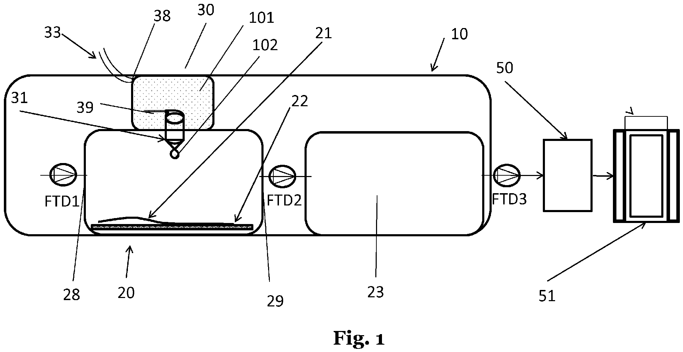

The figures are not drawn to scale, and of purely diagrammatical nature and show the storage and conversion systems according to various embodiments in schematical cross-sectional views. Equal reference numerals in different figures refer to equal or corresponding parts. The system of the invention will be illustrated in the figures 1-8 hereinafter in relation to embodiments, wherein the tank is configured for containing an ammonia precursor as the first composition. This ammonia precursor is for instance an urea solution, more particularly a concentrated urea solution of at least 25 wt% urea, more preferably a urea solution of around 32.5 wt% urea. The term "urea solution" is understood in the context of the present invention, to mean any, generally aqueous, solution containing urea. The invention gives particularly good results with eutectic water/urea solutions for which there is a quality standard; for example, according to the standard ISO 22241, in the case of the AdBlue® solution (a commercial solution of urea), the urea content is between 31.8% and 33.2% (by weight), hence an available amount of ammonia between 18.0% and 18.8%..

While the invention is further illustrated with reference to an urea composition, this is merely a specific example. The ammonia precursor may be different. Moreover, the invention may also be applied to other compounds on board of a vehicle that need conversion, such as the conversion of ammonia and/or other hydrogen precursors into hydrogen for fuel cells.

Generally, such urea solution is stored in a container mounted on the vehicle. The urea solution is injected in the exhaust line, after which the urea will thermally decompose into gaseous ammonia. However, in case of a cold start, the injection of urea into the exhaust gas line does not function appropriately. First of all, the urea may be frozen and it would take some time to thaw it, even when using a heater. Moreover, in order to avoid deposits in the exhaust pipe, aqueous urea solution should not be injected into the exhaust pipe before the exhaust gases have raised the temperature of the exhaust pipe to a sufficient temperature, typically in the range of 180-200 °C. Therefore, the urea solution is to be converted into ammonia, at least partly, so that sufficient ammonia is available in case of a cold start and/or in any other desired situation.

This ammonia precursor is converted into ammonia, in accordance with the invention under catalysis of a biological catalyst. The ammonia may be used in various applications, among which selective catalytic reduction, also known as SCR, and the conversion to hydrogen for fuel cells. Particularly in case of the SCR application, the conversion of urea into ammonia may be necessary only occasionally. Therefore, it is preferred that the biological catalyst is stored in a manner which provides an appropriate protection. This manner is most suitably provided by means of the storage unit separately from the decomposition unit, and even more preferably, by means of storing the biological catalyst composition therein in a solid form.

This urea composition is transferred in liquid form to the decomposition unit, which is thus a liquid reactor.

The system of the invention can be further used to convert (i.e. decompose) fuel vapour. In this last example, the decomposition unit operates as a gas converter, i.e. a gas reactor.

However, the invention is not limited to the said embodiments and variations and alternative applications may be apparent to the skilled person.

Fig. 1 shows in cross-sectional schematical view a first embodiment of the storage and conversion system of the invention. The system is intended for incorporation into a vehicle. Such a vehicle is suitably a so-called hybrid vehicle that is provided with both a combustion engine and a fuel cell 51. However, the system is not limited thereto.

The system of the first embodiment comprises a tank 10 for a urea composition. For sake of simplicity, the tank 10 will hereinafter also be referred to as urea tank 10. The system further comprises a decomposition unit 20, a buffer tank 23, a conversion unit 50 for conversion of ammonia into hydrogen and a fuel cell 51. Fluid transfer devices FTD1, FTD2, FTD3 are present so as to transfer the urea composition. The fluid transfer device FTD1 is configured for transfer of liquid in particular. It is however not excluded that the first composition may be contain solids and/or vapour. The fluid transfer devices FTD2 and FTD3 are in this embodiment configured for the transfer of gas or liquid, more particularly ammonia or aqua ammonia (i.e. reaction product). In the context of the present application, the term "aqua ammonia" is to mean a mixture of effluents resulting from the decomposition of an ammonia precursor. This mixture of effluents may contain ammonium hydroxide (a fraction of which is ionized), residue of ammonia precursor (i.e. part of the ammonia precursor that has not been decomposed) and eventually other products (such as ammonium bicarbonate).

In this and following embodiments, the decomposition unit 20 and the buffer tank 24 are present within the urea tank 10. This is deemed a practical implementation, though this is not necessary. An alternative assembly is for instance one wherein the urea tank 10, the decomposition unit 20 and the buffer tank 23 are all part of a common assembly, which may be in the form of a further shell, such as a plastic shell of any suitable engineering material. While the present figure 1 and any further figures show the size of the decomposition unit 20 and the buffer tank as substantially equal and of similar shape, this is not deemed necessary.

According to one preferred embodiment of the invention, a storage unit 30 for a biological catalyst composition is provided. The storage unit 30 is herein located on top of the decomposition unit 20. It is provided with dosing device 31 at its outlet 39. The storage unit 30 is further provided with an inlet 38 suitable for filling and refilling the storage unit 30 with a storage form 101 of biological catalyst. In this embodiment, the storage form is a liquid composition 101, more generally a dispersion. The liquid composition 101 is suitably concentrated relative to the concentration needed in the decomposition unit 20. The dosing device 31 is in one implementation embodied as a liquid pump. A liquid pump, possible with a nozzle such as used in inkjet printers is deemed suitable. The dosing device 31 may be further provided with an inlet for a diluting agent, suitably an aqueous diluting agent. The addition of such diluting agent may be suitable for a better dispersion of the biological catalyst, and may moreover be beneficial in the prevention of stoppage at an outlet, particularly any nozzle, of the dosing device 31. As a result of the dosing device 31, a dispersed composition 102 of the biological catalyst will be entered into the decomposition unit.

While not shown in the present figure 1, it is deemed beneficial if the decomposition unit is provided with agitation means. The decomposition unit 20 is furthermore provided with an inlet 28 at which the urea composition will enter and an outlet 29. Thermally conditioning means 21, 22 are provided so as to arrange that the decomposition unit can be held at or can be brought to a predefined temperature within a temperature range suitable for activation of the biological catalyst. The thermally conditioning means herein comprise a heater 21 and one or more further thermally conditioning elements 22. The heater 21 is suitably provided in the form of a flexible wire. This has the advantage that the heat may be distributed within the decomposition unit 20. The at least one thermally conditioning elements are in the present embodiment one or more layers of thermally insulating material. While it is deemed most beneficial that such thermally insulating material is present at all walls of the decomposition unit 20, it may be sufficient when this layer 22 is present on the side, wherein the decomposition unit 20 is potentially faced to a cold temperature, or rather a high temperature. It is foreseen that these sides are the bottom side (for the cold environment) and the side facing a combustion engine (in case that this is located adjacent to the urea tank 10).

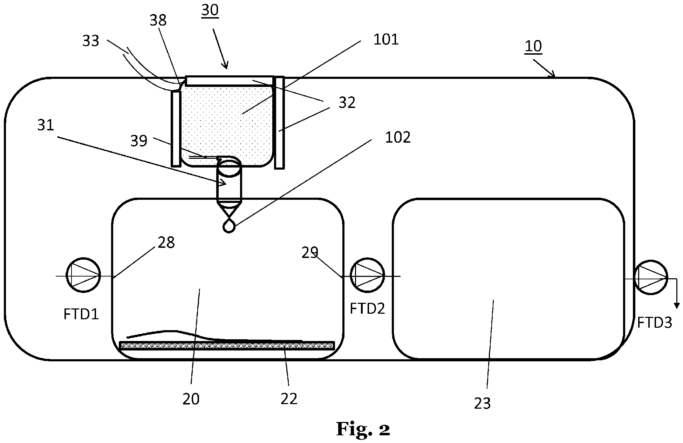

Fig. 2 shows in cross-sectional view a second embodiment of the storage and conversion system of the invention. Herein the storage unit 30 for biological catalyst is located separately from the decomposition unit 20. Furthermore, thermal conditioning elements 32 are present in the storage unit 30. These thermal conditioning elements 32 suitably are embodied as thermally insulating material, such as known per se. However, it is not excluded that the thermal conditioning elements 32 also or even alternatively comprise a heater, which may be also take the form of a heat pump or the like. While the presence of thermal conditioning elements 32 is highly preferred, their presence is not deemed necessarily. For instance, any heating elements in the urea tank 10 may have the effect that the storage unit 30 is sufficiently warmed so as to prevent destruction of the biological catalyst.

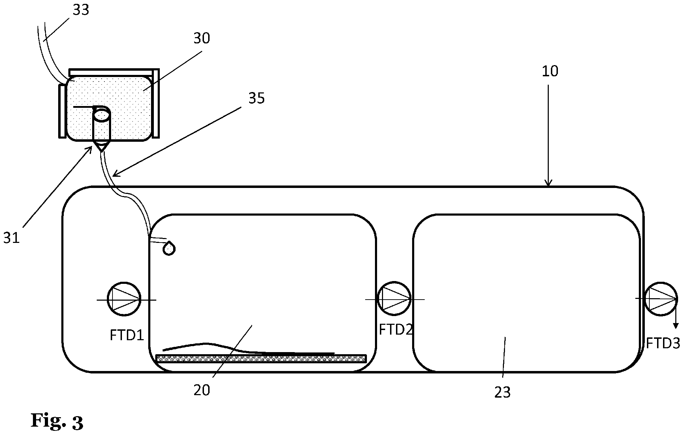

Fig. 3 shows in cross-sectional view a third embodiment of the storage and conversion system of the invention. According to this embodiment, the storage unit 30 for biological catalyst is located outside the tank 10. A connecting pipe 35 is present for connecting the outlet 39 of the storage unit 30 with the decomposition unit 20.

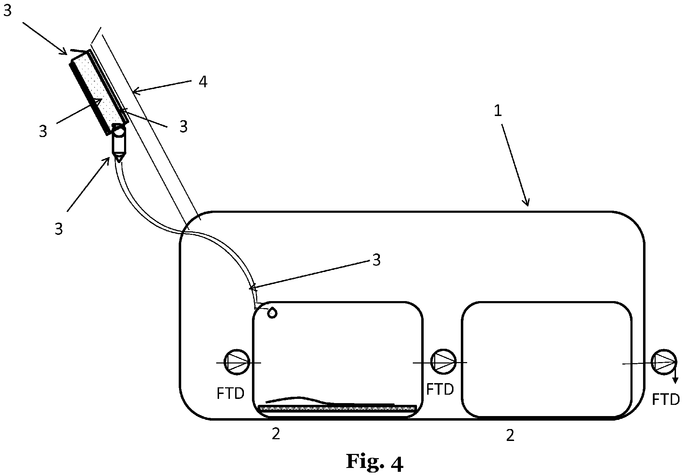

Fig. 4-6 show further implementations and variations of the third embodiment as shown in Fig. 3. Herein, the storage unit 30 for biological catalyst is mounted to a tank filler pipe 40. Besides the advantage of a stable assembly, this mounting has the advantage that the storage unit 30 may be filled and refilled close to the filling entry for the urea composition. In one embodiment, the refilling of the storage unit 30 may be carried out simultaneously with the refilling of the tank 10 with the urea composition. Thereto, refilling means may be provided with a first pipe for the storage form of biological catalyst and with a second pipe for the urea composition. The first pipe and the second pipe may also be integrated into a single armature. In the figures 4-6, the enzyme filling pipe 33 is replaced by an enzyme access port 34, with which the storage unit can be opened and closed. It will be understood that a combination is feasible; i.e. the storage unit 30 could be located intermediate to the enzyme access port 34 and the tank 10.

The embodiments of Fig. 4-6 differ in the location of the dosing device 31. In Fig. 4, the dosing device 21 is provided directly at the storage unit 30. A connecting pipe 35 connects the outlet of the dosing device to the decomposition unit. This implementation has the advantage that the storage form 101 of the composition with biological catalyst may be diluted prior to its transfer. As a result, there is a reduced risk that a major portion of the biological catalyst ends up at the surface of the connecting pipe 35 rather than in the decomposition unit 20.

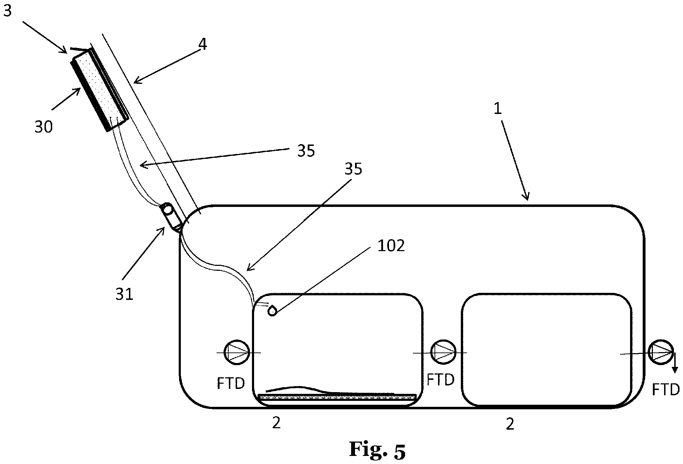

In Fig. 5, the dosing device 31 is mounted to the tank 10, and/or to the tank filler pipe 40. This has the advantage of providing a stable assembly. Moreover, the mounting to the tank 10 and/or the tank filler pipe 40 allows the provision of any heating means or the like to the dosing device 31. Warming up the dosing device and the storage form 101 of the biological catalyst will reduce the viscosity of the composition and prepares the biological catalyst for its entrance into the decomposition unit 20. It is not excluded in this embodiment that the first connecting pipe 351 to the dosing device 31 is herein provided with an inlet for a diluting agent, such as an aqueous solution. A second connecting pipe 352 thereafter connects the outlet of the dosing device 31 to the decomposition unit 20.

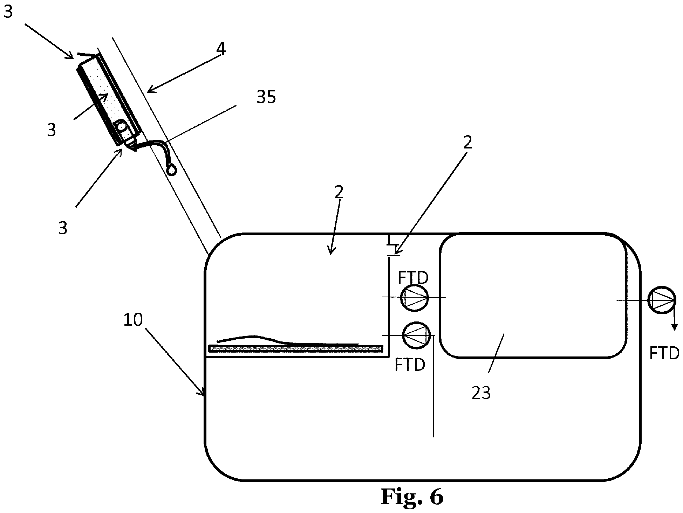

In Fig. 6, the connecting pipe 35 is connected into the tank filler pipe 40 rather than into the decomposition unit 20. Moreover, the tank filler pipe 40 is arranged to insert the urea composition into the decomposition unit 20 directly. This decomposition unit is moreover provided with a check valve 24, i.e. with overflow means such that upon a predefined filling level of the decomposition unit 20 with urea composition, this urea composition will be transferred into the tank 10. Rather than a check valve 24 (overflow means), the connection between the decomposition unit 20 and the tank 10 could be embodied differently, for instance in the form of a (conventional) valve driven by a controller (not shown) such that when filling the tank 10, such valve will be opened, and otherwise it will be closed. The operation of the system according to this embodiment is the following: a sensor, such as a level sensor will detect a level of urea composition in the decomposition unit 20. If the sensed level exceeds a predefined level, a controller may provide a driving signal to the dosing device 31, so as to introduce biological catalyst into the decomposition unit 20.

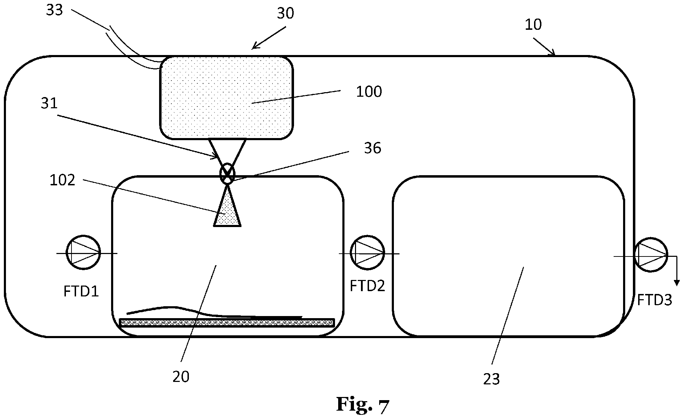

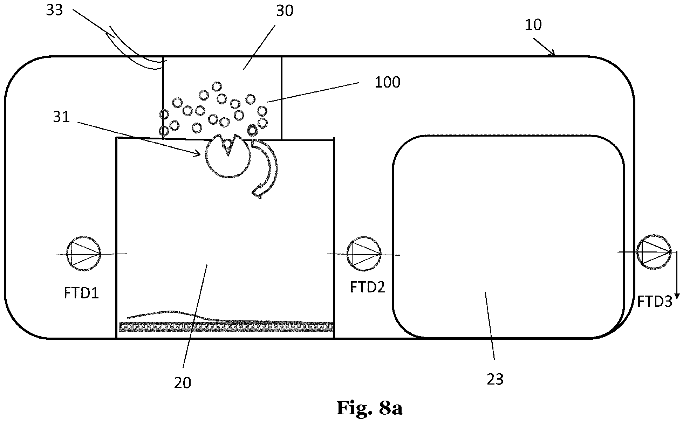

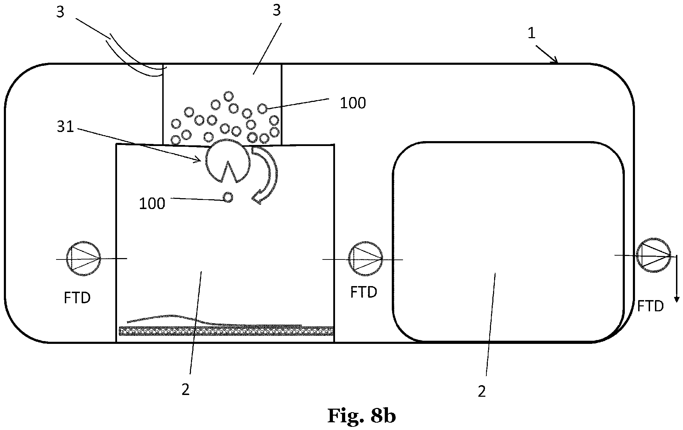

Fig. 7 and 8 show further embodiments of the storage and conversion system of the invention, again in schematic cross-sectional views, wherein the storage form of the biological catalyst is a solid form 100. Such storage form 100 is highly beneficial for the preservation of the biological catalyst. The solid form is for instance a dry, powdered form. Alternatively, the solid form may be a capsule. The term 'solid form' is intended to cover in the context of the present invention both capsules encapsulating biological catalyst in solid form, as well as capsules encapsulating biological catalyst in liquid form. Capsules, powders, granules, pills are known solid forms well known in the field of food and pharmaceuticals. Furthermore, even detergents may be provided in solid forms. Carriers and processing methods, as well as encapsulating materials are known per se. A well known carrier is for instance microcellulose, while alternatives such as starch, including modified starches, other forms of cellulose, lactose and other polysaccharides may be applied as well. Additives such as glycerol may be added for optimum processing. The solid material may be pressed or extruded.

Fig. 7 shows an embodiment, wherein the solid form 100 is a powder, that may further be processed into granules, pills or the like. The storage unit 30 is provided at its outlet 39 with a dosing device 31 suitable for a powder. Such dosing device are known per se. In addition to the dosing device 31, a dispersing means 36 is present that is able to disperse and/or distribute the biological catalyst into the biochemical convert 20. The dispersing means may disperse the biological catalyst as a dispersion or alternatively as a finely divided powder.

Fig. 8(a) and Fig 8(b) show two phases in the operation of a dosing device 31 for capsules. The dosing device 31 is herein provided with a cavity 311 suitable to contain a predefined number of capsules, in the present example 1 capsule. The dosing device 31 is further provided with means for rotating as known per se (not shown). These rotating means allow the dosing device 31 to rotate the cavity 311 from its top side (shown in Fig. 8(a)) to its bottom side (shown in Fig. 8(b)). At the bottom side, the capsule 100 will be released from the cavity and enter the decomposition unit 20.

## Claims

1. A system for obtaining aqua ammonia for use in a vehicle on board, comprising:
- a decomposition unit, in which a catalysed conversion occurs, for obtaining aqua ammonia by decomposition of an ammonia precursor under catalysis of a biological catalyst, said aqua ammonia being a mixture of effluents that contains ammonium hydroxide, residue of ammonia precursor and optionally other products such as ammonium bicarbonate
- a storage unit for storage of biological catalyst,
- a dosing device for transferring biological catalyst into the decomposition unit, and
- a system controller configured to control the dosing device on the basis of conditions inside the storage and conversion system
said system further comprising a buffer tank for containing aqua ammonia obtained in the decomposition unit.

2. The system as claimed in claim 1, wherein the dosing device is configured for transferring a liquid composition of the biological catalyst.

3. The system as claimed in claim 2, wherein the dosing device is a pump or a sprayer.

4. The system as claimed in claim 1, wherein the dosing device is configured for transferring a composition of the biological catalyst in a solid form.

5. The system as claimed in Claim 4, wherein the dosing device is a mechanical distributor.

6. The system as claimed in any of the preceding claims, wherein the storage unit for biological catalyst is provided with means for thermally conditioning the biological catalyst at a predetermined temperature range suitable for preservation of the biological catalyst.

7. The system as claimed in any of the preceding claims, wherein the storage unit is provided with a refilling inlet for the biological catalyst composition.

8. The system as claimed in any of the preceding claims, further comprising conditioning means for thermally conditioning the decomposition unit at a predefined temperature range corresponding to activation of the biological catalyst.

9. The system as claimed in any of the claims 6 or 8, wherein the thermal conditioning means are a heater, a resistive heater, Peltier effect cells, insulating elements, phase change materials.

10. The system as claimed in any of the preceding claims, wherein the decomposition unit is provided with a sensor for sensing progression of the conversion.

11. A vehicle comprising the system as claimed in any of the preceding claims 1-10.

12. A method of operating a system for use on board of a vehicle, comprising the steps of:
- Adding biological catalyst stored in a storage unit into a decomposition unit through a dosing device, and
- converting an ammonia precursor in the decomposition unit for obtaining aqua ammonia under catalysis of the biological catalyst, said aqua ammonia being a mixture of effluents that contains ammonium hydroxide, residue of ammonia precursor and optionally other products such as ammonium bicarbonate,
wherein the system is comprising a controller configured to control the dosing device on the basis of conditions inside the storage and conversion system and is further comprising a buffer tank for containing aqua ammonia obtained in the decomposition unit.

## Patentansprüche

1. System zur Erzeugung von Ammoniakwasser zur Verwendung an Bord eines Fahrzeugs, umfassend:
- eine Zersetzungseinheit, in der eine katalysierte Umwandlung erfolgt, zur Erzeugung von Ammoniakwasser durch Zersetzung eines Ammoniak-Ausgangsstoffs unter Katalyse eines biologischen Katalysators, wobei das Ammoniakwasser eine Mischung aus freigesetzten Stoffen ist, die Ammoniumhydroxid, Rückstände des Ammoniak-Ausgangsstoffs und optional andere Stoffe, wie beispielsweise Ammoniumbicarbonat enthält,
- eine Speichereinheit zum Speichern des biologischen Katalysators,
- eine Dosiervorrichtung zum Einbringen des biologischen Katalysators in die Zersetzungseinheit, und
- eine Systemsteuerung, die dazu ausgelegt ist, die Dosiervorrichtung auf der Grundlage von Bedingungen zu steuern, die im Speicher- und Umwandlungssystem herrschen.

2. System nach Anspruch 1, wobei die Dosiervorrichtung dazu ausgelegt ist, eine flüssige Zusammensetzung des biologischen Katalysators einzubringen.

3. System nach Anspruch 2, wobei die Dosiervorrichtung eine Pumpe oder eine Sprüheinrichtung ist.

4. System nach Anspruch 1, wobei die Dosiervorrichtung dazu ausgelegt ist, eine Feststoff-Zusammensetzung des biologischen Katalysators einzubringen.

5. System nach Anspruch 4, wobei die Dosiervorrichtung ein mechanischer Verteiler ist.

6. System nach einem der vorhergehenden Ansprüche, wobei die Speichereinheit zum Speichern des biologischen Katalysators mit Mitteln zur thermischen Konditionierung des biologischen Katalysators in einem vorgegebenen, für die Konservierung des biologischen Katalysator geeigneten Temperaturbereich ausgestattet ist.

7. System nach einem der vorhergehenden Ansprüche, wobei die Speichereinheit mit einem Einlass zur Wiederbefüllung mit dem biologischen Katalysator ausgestattet ist.

8. System nach einem der vorhergehenden Ansprüche, ferner umfassend Konditionierungsmittel zur thermischen Konditionierung der Zersetzungseinheit in einem vorgegebenen Temperaturbereich korrespondierend zur Aktivierung des biologischen Katalysators.

9. System nach Anspruch 6 oder 8, wobei die thermischen Konditionierungsmittel eine Heizung, eine resistive Heizvorrichtung, ein Peltier-Element, Dämmelemente, Phasenwechselmaterialien sind.

10. System nach einem der vorhergehenden Ansprüche, wobei die Zersetzungseinheit mit einem Sensor zur Erfassung des Fortschritts der Umwandlung ausgestattet ist.

11. Fahrzeug mit einem System nach einem der Ansprüche 1 bis 10.

12. Verfahren zum Betreiben eines Systems an Bord eines Fahrzeugs, umfassend die Schritte:
- Einbringen eines in einer Speichereinheit gespeicherten biologischen Katalysators in eine Zersetzungseinheit mittels einer Dosiervorrichtung, und
- Umwandeln eines Ammoniak-Ausgangsstoffs in der Zersetzungseinheit zur Erzeugung von Ammoniakwasser unter Katalyse des biologischen Katalysators, wobei das Ammoniakwasser eine Mischung aus freigesetzten Stoffen ist, die Ammoniumhydroxid, Rückstände des Ammoniak-Ausgangsstoffs und optional andere Stoffe, wie beispielsweise Ammoniumbicarbonat enthält,
wobei das System eine Steuerung umfasst, die dazu ausgelegt ist, die Dosiervorrichtung auf der Grundlage von Bedingungen zu steuern, die im Speicher- und Umwandlungssystem herrschen,
und wobei das System einen Pufferspeicher zur Aufbewahrung des in der Zersetzungseinheit erzeugten Ammoniakwassers umfasst.

## Revendications

1. Un système pour obtenir de l'*aqua ammonia* (ammoniac aqueux) destinée à être utilisée dans un véhicule, de façon embarquée, comprenant :
- une unité de décomposition, dans laquelle se produit une conversion catalysée, pour obtenir de l'*aqua ammonia* par décomposition d'un précurseur d'ammoniac sous catalyse d'un catalyseur biologique, ladite *aqua ammonia* étant un mélange d'effluents contenant de l'hydroxyde d'ammonium, du résidu de précurseur de l'*aqua ammonia* et éventuellement d'autres produits tels que le bicarbonate d'ammonium
- une unité de stockage pour le stockage du catalyseur biologique,
- un dispositif de dosage pour transférer le catalyseur biologique dans l'unité de décomposition, et
- un contrôleur de système configuré pour commander le dispositif de dosage sur la base des conditions présentes à l'intérieur du système de stockage et de conversion
ledit système comprenant en outre un réservoir tampon pour contenir de l'*aqua ammonia* obtenue dans l'unité de décomposition.

2. Le système tel que revendiqué dans la revendication 1, dans lequel le dispositif de dosage est configuré pour transférer une composition liquide du catalyseur biologique.

3. Le système tel que revendiqué dans la revendication 2, dans lequel le dispositif de dosage est une pompe ou un pulvérisateur.

4. Le système tel que revendiqué dans la revendication 1, dans lequel le dispositif de dosage est configuré pour transférer une composition du catalyseur biologique sous une forme solide.

5. Le système tel que revendiqué dans la revendication 4, dans lequel le dispositif de dosage est un distributeur mécanique.

6. Le système tel que revendiqué dans l'une quelconque des revendications précédentes, dans lequel l'unité de stockage pour catalyseur biologique est pourvue de moyens pour conditionner thermiquement le catalyseur biologique à une plage de températures prédéterminée appropriée pour la conservation du catalyseur biologique.

7. Le système tel que revendiqué dans l'une quelconque des revendications précédentes, dans lequel l'unité de stockage est pourvue d'une entrée de remplissage pour la composition de catalyseur biologique.

8. Le système tel que revendiqué dans l'une quelconque des revendications précédentes, comprenant en outre des moyens de conditionnement pour conditionner thermiquement l'unité de décomposition dans une plage de températures prédéfinie correspondant à l'activation du catalyseur biologique.

9. Le système tel que revendiqué dans l'une quelconque des revendications 6 ou 8, dans lequel les moyens de conditionnement thermique sont un dispositif de chauffage, un dispositif de chauffage résistif, des cellules à effet Peltier, des éléments isolants, des matériaux à changement de phase.

10. Le système tel que revendiqué dans l'une quelconque des revendications précédentes, dans lequel l'unité de décomposition est pourvue d'un capteur pour détecter la progression de la conversion.

11. Un véhicule comprenant le système tel que revendiqué dans l'une quelconque des revendications 1 à 10 qui précèdent.

12. Un procédé pour faire fonctionner un système destiné à être utilisé à bord d'un véhicule, comprenant les étapes consistant à :
- ajouter un catalyseur biologique stocké dans une unité de stockage dans une unité de décomposition à travers un dispositif de dosage, et
- convertir un précurseur d'ammoniac dans l'unité de décomposition pour obtenir de l'*aqua ammonia* sous catalyse du catalyseur biologique, ladite *aqua ammoniac* étant un mélange d'effluents contenant de l'hydroxyde d'ammonium, un résidu de précurseur d'ammoniac et éventuellement d'autres produits tels que du bicarbonate d'ammonium,
le système comprenant un contrôleur configuré pour commander le dispositif de dosage sur la base des conditions régnant à l'intérieur du système de stockage et de conversion, et comprenant en outre un réservoir tampon pour contenir de l'*aqua ammonia* obtenue dans l'unité de décomposition.
